# EUROPÄISCHE PATENTANMELDUNG

(11) **EP 4 063 456 A1**
(43) Veröffentlichungstag der Anmeldung: **28.09.2022**
(21) Anmeldenummer: 21403201.3
(22) Anmeldetag: 22.03.2021
(51) Int. Cl.: C08L 71/00

(54) **BIOKUNSTOFF, DESSEN HERSTELLUNG UND VERWENDUNG**

(71) Anmelder: Parinaz, Jabirian, 13349 Berlin (DE)
(72) Erfinder: Parinaz, Jabirian, 13349 Berlin (DE)

(57) **Zusammenfassung**

Die Erfindung betrifft einen vielseitig einsetzbaren biologisch abbaubaren Biokunststoff umfassend ein Harz der Pflanze Astragalus, Glycerin und ein Quellmittel. Die Erfindung betrifft außerdem ein Herstellungsverfahren für den Biokunststoff und dessen Verwendung insbesondere als Verpackungsmaterial, Körperpflegeprodukt oder Medizinprodukt.

## Beschreibung

### Stand der Technik

Aufgrund zahlreicher Nachteile synthetischer Verpackungsmaterialien (wie z.B. teure Rohstoffe, hohe Produktionskosten, Umweltverschmutzung und Polymerverbindungen mit Lebensmitteln) wurden in den letzten Jahren natürliche Polymere als sichere und biologisch abbaubare Alternativen eingesetzt. Die zerstörerischen Umweltauswirkungen durch Kunststoffansammlungen sind eines der größten Probleme der heutigen Welt.

Erhebliche Mengen dieser Abfälle stehen im Zusammenhang mit Polymeren, die als Lebensmittelverpackungen verwendet werden. In den letzten Jahren haben Experten der Lebensmittelindustrie nach geeigneten Alternativen zu synthetischen Polymeren gesucht. Biologisch abbaubare Folien sind dabei eine mögliche Lösung.

Ziel der Erfindung war es, ein naturfreundliches, erneuerbares, abbaubares und wiederverwertbares Material aus nachwachsenden Rohstoffen zu entwickeln.

Traganth, Tragant, Tragakant und auf persisch Katira ist ein Gummi bzw. ein natürliches Polysaccharid, ein getrockneter Gummiausfluss oder Saft aus einer Pflanze, die als TragantGummi oder Astragalus bekannt ist. Der Name Tragant leitet sich von den griechischen Wörtern Tragos (Ziege) und Akantha (Horn) ab, die das Aussehen des Exsudats beschreiben.

Der Gummi wird auch Shiraz-Gummi, Shiraz-Gum oder Gum-Dragon genannt. Tragantgummi ist ein alter Handelsgummi, der bereits im dritten Jahrhundert vor Christus von Theophrastus beschrieben wurde.

Tragant (Astragalus), genannt auch Bocksdorn, ist eine Pflanzengattung in der Unterfamilie der Schmetterlingsblütler (Faboideae) innerhalb der Familie der Hülsenfrüchtler (Fabaceae). Mit etwa 1600 bis 3000 Arten ist sie die größte Gattung innerhalb der Gefäßpflanzen. Sie ist über den größten Teil der Nordhalbkugel (Holarktis) verbreitet. Aus einigen Arten wird das Verdickungsmittel Traganth gewonnen.

Tragant ist eine kleine Pflanze mit einer Höhe von einem Meter, die in Kleinasien, Iran, Syrien und Griechenland heimisch ist. Durch das Abkratzten des Pflanzenstammes absorbieren die Zellwände der Strahlen- und Parenchymzellen allmählich Gummi. Durch die Absorption des vorhandenen Wassers in der Luft, entsteht ein Druck, der den Gummi in Richtung des Schlitzes drückt. Durch die fortschreitende Verdunstung des Wassers im Gummi, verhärtet sich dieser immer mehr. Die Form des getrockneten Produkts hängt von der Art des am Stiel erzeugten Schlitzes ab.

Der Gummi ist Blatt-, Band-, Patch- und Draht-förmig. Je kürzer die Trocknungszeit, desto weißer und klarer wird der Gummi. Tragant enthält ca. 10-15% Wasser, 4-3% Mineralien und 3% Stärke. Außerdem enthält es noch Basorin, dies ist ein Komplex aus Plutoxinsäuren. Basorin, das ca. 70-60% des Tragants ausmacht, enthält Galacturonsäure, die an Galactose- und Xylosezucker gebunden ist. Basorin ist ein wasserlöslicher Stoff, insbesondere in kaltem Wasser. Der Tragantgummi enthält außerdem auch geringe Mengen an Cellulose und Protein.

Tragant ist ein Gummi, der durch menschliche mechanische Aktivität aus dem Stamm sickert. Die Arbeit beginnt normalerweise im späten Frühjahr und dauert ca. 60 Tage. Dabei wird der Stiel geleert, indem zuerst um ihn herum gearbeitet wird und anschließend spezielle Schnitte parallel zum Stiel hineingeschnitten werden. Nach einigen Tagen sickert die dickflüssige Masse aus dem Stiel heraus. Der Saft verliert durch das Aussetzen mit dem Sonnenlichts Wasser und wird fest.

Tragantgummi ist im Iran reichlich vorhanden. Der Iran ist der größte Produzent dieses Gummis. Aufgrund des vielfältigen Klimas, der Wüste und der Berggebiete ist der Iran eine geeignete Umgebung für das Wachstum dieser Pflanze, welche gut unter trockenen und niedrigen Wasserbedingungen wächst.

Tragantgummi ist einer der am häufigsten verwendeten natürlichen Emulgatoren und Verdickungsmittel in der Lebensmittel- und Arzneimittelindustrie. Die hohe Viskosität, die der Gummi dem Wasser verleiht, macht es möglich, wässrige Suspensionen unlöslicher Substanzen herzustellen.

Eine wichtige Eigenschaft von Tragantgummi ist seine Fähigkeit, Lösungen mit hoher Viskosität herzustellen.

Es ist seit langem in der Lebensmittel-, Pharma-, Kosmetik-, Textil- und Medizinindustrie weit verbreitet. Es wird in Pharmazeutika als Geliermittel, Suspendiermittel und Bindemittel bei der Herstellung von Pillen, Arzneimitteln und Mikronährstoffen verschiedener Substanzen wie Vitaminen und Duftstoffen verwendet. In den medizinischen Wissenschaften wurde auch berichtet, dass Tragant das Wachstum von Krebszellen hemmt, seine dauerhafte Verwendung den Blutzucker bei Diabetikern reguliert und seine Wirkung in der Wundheilung nachgewiesen wurde.

Es wird bei der Herstellung von Cremes, Gelen und Emulsionen in unterschiedlichen Konzentrationen eingesetzt. Es wird auch in der Kosmetik als Verdickungsmittel, Suspension und Filmbildner verwendet, und zur Herstellung von Kosmetika wie z.B. Handpflegeprodukte. Tragantgummi ist kein Reizstoff und verfügt über keine allergenen Eigenschaften. Dermatologisch ist er harmlos und ein unbedenklicher Weichmacher. Der Gummi wird in der pflanzlich gegerbten Lederverarbeitung als Kantenglättungs- und Poliermittel verwendet und gelegentlich auch zur Versteifung von Textilien. Außerdem wurde er in der Vergangenheit für Zahnfleischbehandlungen, gegen Husten und Durchfall als pflanzliches Heilmitte eingesetzt.

Im Gesundheitswesen wird Tragant zur Stärkung der Knochen eingesetzt, sowie als Schutz vor Krankheitserregern. Studien zu den Eigenschaften von Astragalus und Tragant haben gezeigt, dass diese Heilpflanze Immunzellen aktivieren kann und die Fähigkeit besitzt Tumorwachstum zu hemmen. In der traditionellen Medizin wird Tragant bei der Behandlung von Diabetes und Nephritis eingesetzt. Außerdem ist der Einsatz in der Behandlung von Zahnfleisch- und Zahninfektionen bekannt. Tragant wird wegen seiner Adhäsionseigenschaften auch in Dentaladhäsivprodukten verwendet. Des Weiteren ist der Einsatz zu Herzfrequenzanpassung im Stand der Technik beschrieben. Tragant wird als beruhigendes Mittel gegen Husten in Erkältungsmedikamenten verwendet. Außerdem ist eine verdauungsfördernde Wirkung beschrieben und durch seine Wasser bindenden der Einsatz bei Durchfall. Tragant ist aufgrund seiner abführenden Eigenschaften ein wirksames Heilmittel gegen Verstopfung. Tragantgummi ist eine sehr wirksame Methode zur Behandlung von Harninkontinenz. Es hilft auch, die Harnmuskulatur zu beruhigen, um Entzündungen der Harnwege und der Blase zu verhindern.

Eine der wichtigsten Eigenschaften von Tragant ist seine Verwendung als natürliches und pflanzliches Waschmittel für Haare. Tragant hilft, die Kopfhaut zu pflegen und Schuppen zu behandeln. Tragantgummi ist eine bekannte Behandlungsmöglichkeit zur Steigerung der Libido von Männern. Es ist ein wirksames und ein natürliches Medikament für sexuelle Probleme.

Tragant kann außerdem zur Reduzierung starker Blutungen während der Menstruation eigesetzt werden und ist auch während der Schwangerschaft sehr nützlich, da es reich an Kalzium und Eiweiß ist. Das Einnehmen stärkt die Knochen und beugt dadurch auch Schmerzen im unteren Rückenbereich vor. Tragant wird auch stillenden Müttern verabreicht, da angenommen wird, dass es die Muttermilchproduktion erhöht. Weiterhin ist es als professionelles Kühlmittel gegen Hitze bekannt und senkt die Körpertemperatur.

In der Kosmetikbranche wird Tragant als Conditioner eingesetzt und hilft Haar-Spliss vorzubeugen. Weiterhin wird Tragant zur Aufhellung der Haut und Entfernung von Gesichtsflecken eingesetzt. Tragant ist sehr nährend für die Haut und verbessert so die Schönheit. Es hat desinfizierende Eigenschaften und verzögert das Auftreten von Falten und feinen Linien. Es wird zum Füllen des Gesichts verwendet.

Es war Aufgabe der Erfindung einen umweltfreundlichen und biologisch abbaubaren Biokunststoff herzustellen, der in einem breiten Anwendungsspektrum nutzbar ist.

### Beschreibung der Erfindung

Gelöst wird die Aufgabe durch die Ausführungsformen der unabhängigen Ansprüche. Bevorzugte Ausführungsformen finden sich in den abhängigen Ansprüchen.

In einer ersten bevorzugten Ausführungsform betrifft die Erfindung einen Biokunststoff umfassend ein Harz der Pflanze Astragalus und Glycerin und einem Quellmittel, wobei der Biokunstoff biologisch abbaubar ist.

Im Sinne der Erfindung ist ein nachwachsender Biokunststoff auf Rohstoffbasis, der als Alternative zu herkömmlichen Kunststoffen dienen kann, und nach der Verwendung für verschiedene Zwecke, vollständig biologisch abbaubar ist. Die Quelle dieses nachwachsenden Rohstoffs ist eine Pflanze, die unter trockenen und wasserarmen Bedingungen gut wächst. Es ermöglicht eine nachhaltige Verpackung für zahlreiche Industriezweige, da es Thermoplast und zum Tiefziehen geeignet ist. Es hat eine starke Zugfestigkeit und eine ausreichende Flexibilität zum Verformen. Es ist transparent, nicht giftig, sondern sogar essbar und aufgrund seiner geschmacks- und geruchsneutralen Eigenschaften ist es ein gutes Material für den Kontakt mit Lebensmitteln. Andererseits kann dieser Kunststoff aufgrund seiner Wasserlöslichkeit als kompostierbarer Biokunststoff bezeichnet werden. Er kann somit von Menschen z.B. als Körperpflege, Gesichtsmaske oder als Reinigungsmitteln zum Duschen und Waschen, und für Pflanzen und Vögeln im Garten als Nahrungsmitteln weiterbenutzt werden. Die tiefgezogenen Formen weisen je nach Stärke und Menge des Glycerins unterschiedliche Stabilität auf. Je nachdem können sie dann für verschiedene Verpackungszwecke, Verpackungsmaterial oder Körperpflegeprodukte aller Arten verwendet werden. Je nach Dicke löst es sich in wenigen Minuten im Wasser auf. Nach dem Kontakt mit dem Quellmittel quillt es in seiner Form auf und zersetzt sich langsamer. Druck beschleunigt den Zersetzungsprozess. Dieser naturfreundliche Biokunststoff ist außerdem Öl- und Alkoholresistent.

Bevorzugt handelt es sich bei dem Quellmittel um Wasser oder eine wässrige Lösung.

Es ist dabei bevorzugt, dass der Biokunststoff wasserlöslich, geschmacksneutral, geruchlos, ungiftig, essbar, transparent, zugfest, flexibel, ölresistent, alkoholresistent, druckbar und recyclebar ist. Der Biokunststoff kann mit einem Farbstoff umgefasst werden.

In einer weiteren bevorzugten Ausführungsform betrifft die Erfindung ein Verfahren zur Herstellung dieses Biokunststoffes umfassend mindestens die folgende Schritte:
a) Bereitstellung eines Harzes der Pflanze Astragalus
b) Inkubation des Harzes mit einem flüssigen Quellmittel
c) Blenden
d) Eindicken (und/oder Homogenisierung)
e) Zugabe Glycerin und optional mindestens einem Farbstoff zu dem gequollenen Harz,
f) Mischen,
g) Sieben,
h) Vakuumieren und Entfernen von Luftblasen,
i) auf eine Platte gießen
j) Aushärten.

Das ausgehärtete Polymer wird bevorzugt mittels Tiefziehtechnik formgebend bearbeitet.

Durch das Tiefziehen wird der Kunststoff stark verformt, was zu sehr harten Endteilen führen kann. Die Vorteile dieser Methode sind die Geschwindigkeit, Beseitigt Montageschritte, Nahtlosigkeit, hohe Genauigkeit, die Möglichkeit komplexe Formen zu erzeugen sowie die Möglichkeit sehr stabile Teile zu erzeugen.

Es hat sich dabei als besonders vorteilhaft erwiesen, die Folien vor dem Tiefziehen mit Glycerin einzureiben.

Außerdem handelt es sich bei dem Quellmittel bevorzugt um eine wässriges Quellmittel, ausgewählt aus der Gruppe umfassend Wasser, destilliertes Wasser wässrige Lösungen usw.

Das Eindicken aus Schritte d) kann mit und ohne Wärmezufuhr erfolgen. Bei Schritt d wird eine Temperatur von 0 - 100 °C bevorzugt. Das flüssige Material kann auch ohne Wärmezufuhr gegossen werden, um das Folie herzustellen.

Durch die Variation der Glycerinmenge kann die Flexibilität und Zugfestigkeit eingestellt werden. Das Verhältnis von Harz zu Quellmittel kann je nach Bedarf variieren.

Das Verhältnis von Harz kann zu andere zusätzliche Stoffe oder Materialien wie Gewürze, Kräuter oder andere Verdickungsmittel kann je nach Bedarf variieren.

In einer weiteren bevorzugten Ausführungsform betrifft die Erfindung einen Biokunststoff der mit dem genannten Herstellungsverfahren hergestellt wird.

Dieser Biokunststoff kann als Verpackungsmaterial oder Körperpflegeprodukte verwendet werden. Auch eine Verwendung in Medizinprodukte oder Medizinverpackungen ist möglich.

Es ist weiterhin bevorzugt, dass das Biokunstoff die Möglichkeit bietet unterschiedlichen Texturen hergestellt zu werden. D.h. dass das flüssige Harz auf verschiedene Platten mit unterschiedlichen Texturen gegossen und hergestellt werden kann.

Das fertigte Material kann nach Unterschiedlichen Techniken als Verpackung bereitgestellt werden.

Zum Beispiel Tiefziehtechnik, Falten der Folien, Nähen (Mit Faden und Ultraschall), Kleben unter Benutzung von Wasser oder andere Verbindungsmöglichkeiten.

Ein weiterer Vorteil der Erfindung ist, dass der hergestellte Tragant Film ist wiederverwertbar ist. Dieses Material ist leicht recycelbar. Die Reste werden dabei wieder in Wasser getaucht und das gleiche Verfahren wie zur Herstellung des Kunststoffs werden durchgeführt.

### Beispiel

Im Folgenden wird die Erfindung anhand von Beispielen und Figuren näher erläutert, ohne dabei auf diese beschränkt zu sein.

### Herstellungs- und Verpackungsverfahren als Beispiel:

- 20% (20 g Harz plus 1000 ml Wasser) flüssiges Harz
- 10 g Glycerin
- Ein paar Tropfen Lebensmittelfarbe (0.5 g)

Zunächst werden 20 g Tragant für 24 Stunden in 1000 ml Wasser gelöst. Am nächsten Tag wird das gequollene Harz 10 Sekunden in einem Mixer verrührt. Das gemischte flüssige Harz wird in einem Topf etwa 25 bis 35 Minuten lang erhitzt. Die Hitze lässt das Harz eindicken und homogenisieren. Etwa 10 Minuten nachdem der Siedepunkt erreicht ist, beginnt das kochende Harz zu verdampfen. Zu diesem Moment ist das Harz eine klare Flüssigkeit. Während der Abkühlung werden 10 g Glycerin und 0,5 g Lebensmittelfarbe zugegeben und gut durchgemischt. Daraufhin wird das gemischte Harz gesiebt und in die Vakuum-Maschine gestellt. Es dauert ca. 15 bis 20 Minuten, bis alle Luftblasen sich entfernen. Nach dem Trocknen wird die Folie mit einem Messer von der Kante getrennt und abgezogen. Dann ist die hergestellte Folie bereit zum Verwenden.

Zum Tiefziehen der neu entwickelte Folie wurden die komplexe organische Formen ausgewählt. Um die richtige Einstellungen zu finden, wurden unterschiedliche Temperaturen, verschieden lange Hitzezufuhren durch die Tiefziehen-Maschine sowie verschiedene Materialstärken und Glycerin-Mengen ausprobiert. Die Folie wurde bei einer sieben sekündigen Hitzezufuhr von 510 Grad sehr genau tiefgezogen. Um tiefzuziehen, wurden die Positiv- und Negative 3D-Modelle im Rhinoceros-Programm erstellt und aus Polyurethan Hartschaum gefräst. Es wurden einige Objekte aus den tiefgezogenen Folien hergestellt. Durch die Negativformen werden die geklebten Kanten zusammengedrückt und anschließend im Ofen für 15 Minuten getrocknet. Dadurch ist die Form versiegelt. Schließlich wird die Verpackung versäubert, indem die Kanten sauber abgeschnitten werden. Um eine kleine Öffnung zu bewahren, wurde einen Teil der Kante mit einem Stück Papier gedeckt. Durch diese Öffnung kann das Objekt mit einer Spritze mit dem Inhalt gefüllt werden. Die selbe Stelle kann später als die Objekt-Öffnung benutzt werden. Die Öffnung ist in stehender Position geschlossen. Durch geringen Druck öffnet sich der "Verschluss" und man kann das Öl ausgießen. Nach dem Gebrauch schließt sich die Öffnung wieder automatisch. Dadurch benötigt das Objekt keinen Deckel. Der Behälter selbst kann komplett aufgebraucht werden. Da Tragant für Haut und Haar gesund ist, könnte die leere Verpackung z.B. als Gesichtsmaske oder Scrub benutzt werden. Um die Verpackung in einer Gesichtsmaske zu transformieren, schneidet man die leere Verpackung einfach an einer Seite auf und legt die angefeuchtete Folie auf das Gesicht. Alternativ ist es möglich die leere Verpackung wie einen Handschuh über die Finger zu ziehen und damit Gesicht oder Körper einzureiben. Als dritte Variante könnte die Verpackung in kleine Teile geschnitten und in einer Schale Wasser zu einem Gel aufgelöst werden, womit es als Waschmittel benutzt wird. (Das ist nur ein Beispiel über Herstellungsverfahren und Verpackung aus viele Möglichkeiten, die dieser Biokunststoff, Herstellungsverfahren und Verpackungsmöglichkeiten uns bietet. D.h. es ist möglich, der Biokunststoff, Herstellungsverfahren und Verpackungsmöglichkeiten nach Bedarf zu variieren und auf andere Art und Weise vorzubereiten.)

### Figuren:

### Herstellungsverfahren:

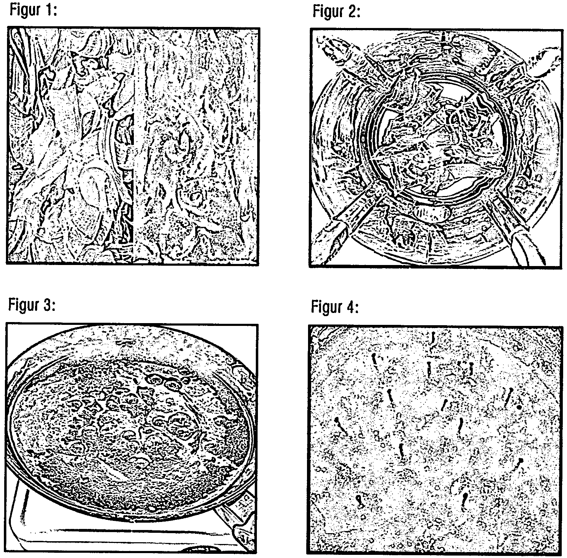

**Figur 1****:** Zunächst werden Tragant Harz in Wasser gelöst.
**Figur 2****:** Am nächsten Tag wird das gequollene Harz in einem Mixer verrührt.
**Figur 3****:** Das gemischte flüssige Harz wird in einem Topf erhitzt.
**Figur 4****:** Während der Abkühlung werden Glycerin und Lebensmittelfarbe zugegeben und gut durchgemischt.

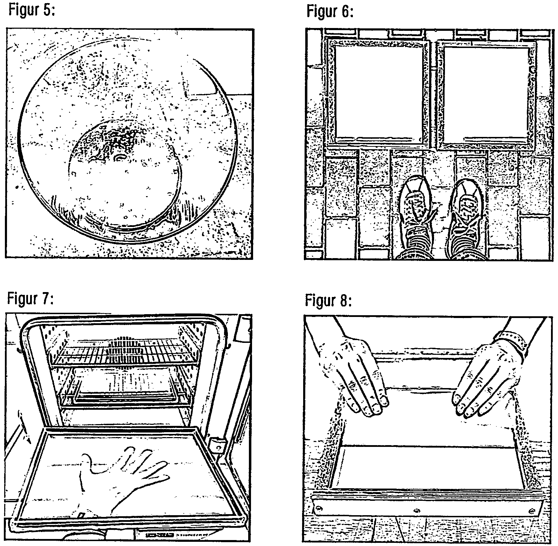

**Figur 5****:** Daraufhin wird das gemischte Harz gesiebt und in die Vakuum-Maschine gestellt, damit alle Luftblasen entweichen.
**Figur 6****:** Dann wird das Harz auf die Platten gegossen.
**Figur 7****:** Das Harz wird dann im Ofen erhitzt, bis das Material trocknet und eine Folie hergestellt wird.
**Figur 8****:** Nach dem Trocknen wird die Folie mit einem Messer von der Kante getrennt und abgezogen.

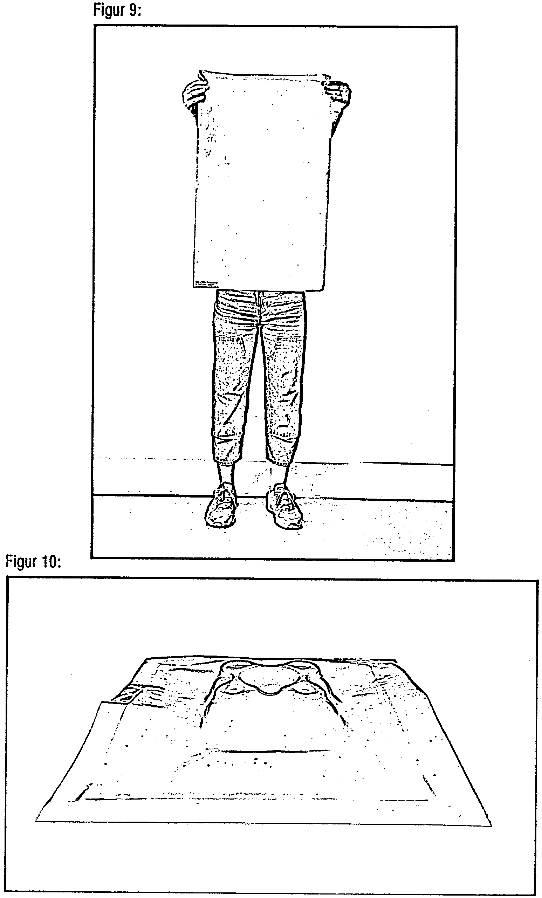

**Figur 9****:** Eine hergestellte Folie-Biokunststoff
**Figur 10****:** Eine tiefgezogene hergestellte Folie-Biokunststoff

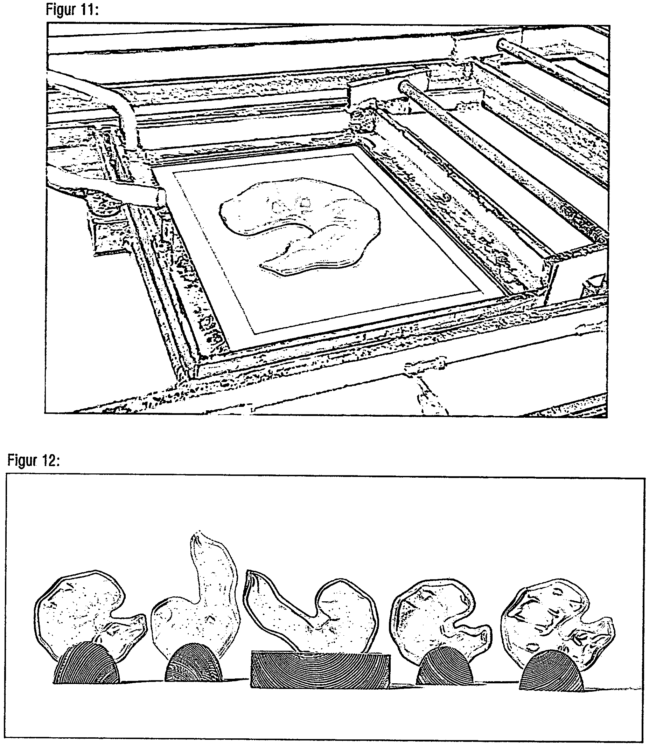

**Figur 11****:** Eine hergestellte Folie-Biokunststoff in einer Tiefziehmaschine
**Figur 12****:** verschiedene tiefgezogene Produkte aus der hergestellten Folie

### Herstellungs- und Verpackungsverfahren als Beispiel:

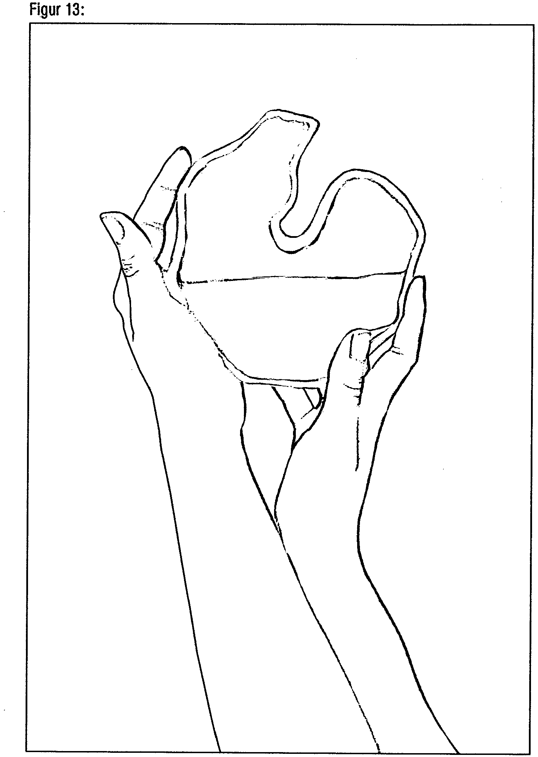

**Figur 13****:** Ein fertiges Produkt aus tiefgezogenen hergestellten Biokunststoff als ein Beispiel

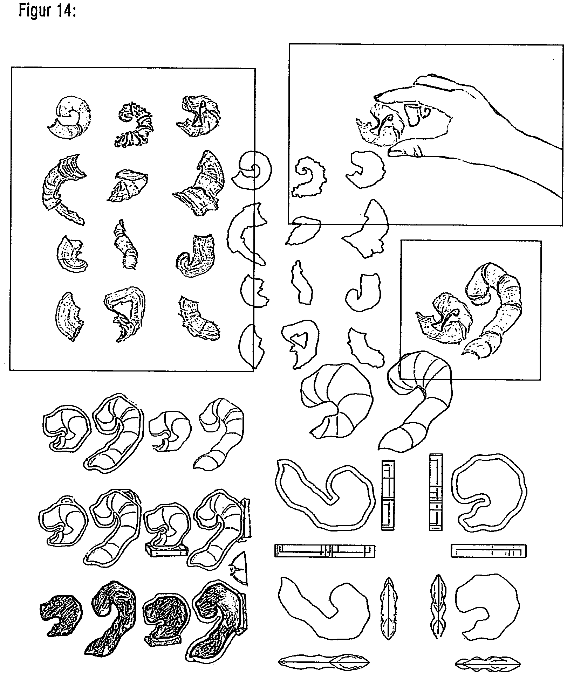

**Figur 14****:** Aus dem getrockneten Tragantharz wurden zwei organische Formen ausgewählt. Die positiven und negativen Formen für das Tiefziehen wurden im CAD-Programm Rhinoceros erstellt.

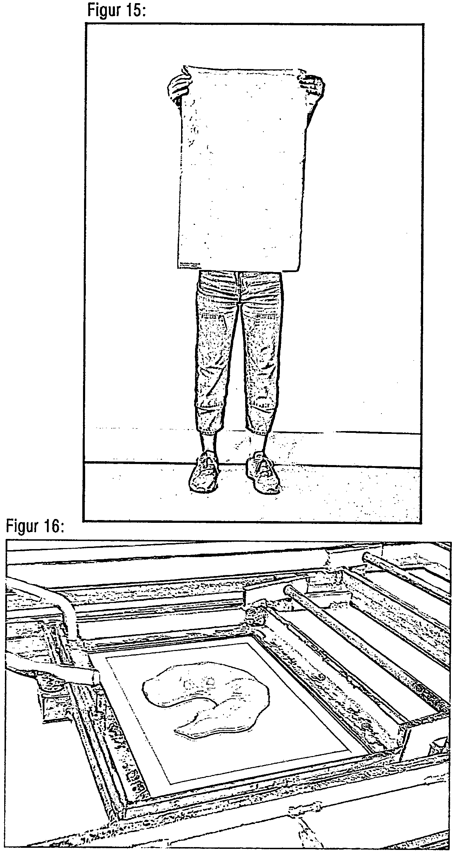

**Figur 15****:** Ein hergestellter Filmbiokunststoff wurde zum Tiefziehen hergestellt.
**Figur 16****:** Der hergestellte Filmbiokunststoff wurde tiefgezogen.

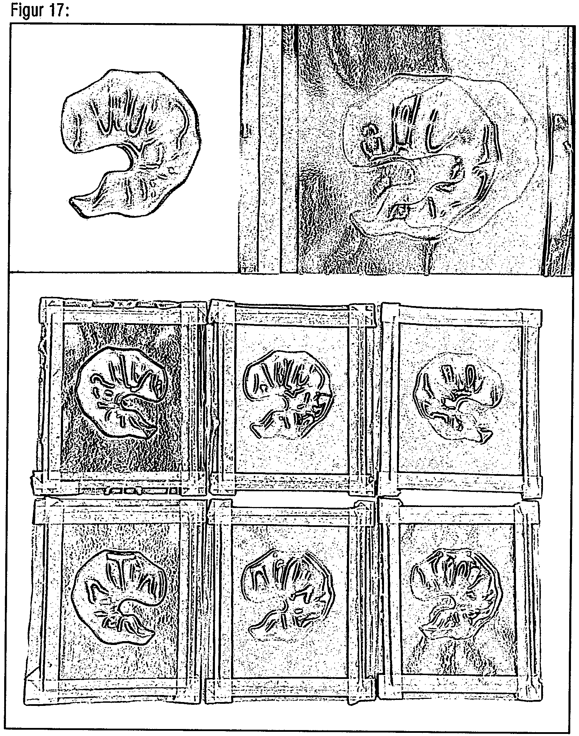

**Figur 17****:** verschiedene tiefgezogene hergestellten Folie waren bereit zum Aufbauen

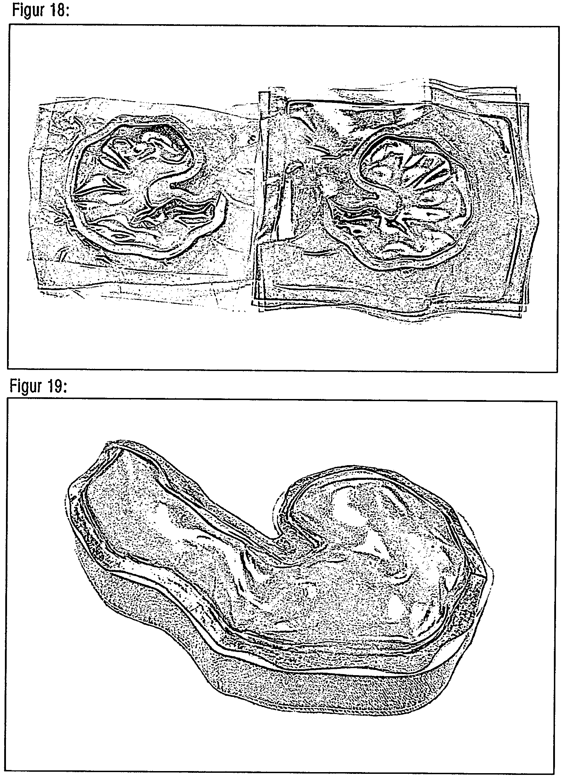

**Figur 18****:** Die tiefgezogene Folie-Biokunststoffe wurden zusammen verbindet.
**Figur 19****:** Die zusammengefügten Film-Biokunststoffe wurden von der Kante abgeschnitten.

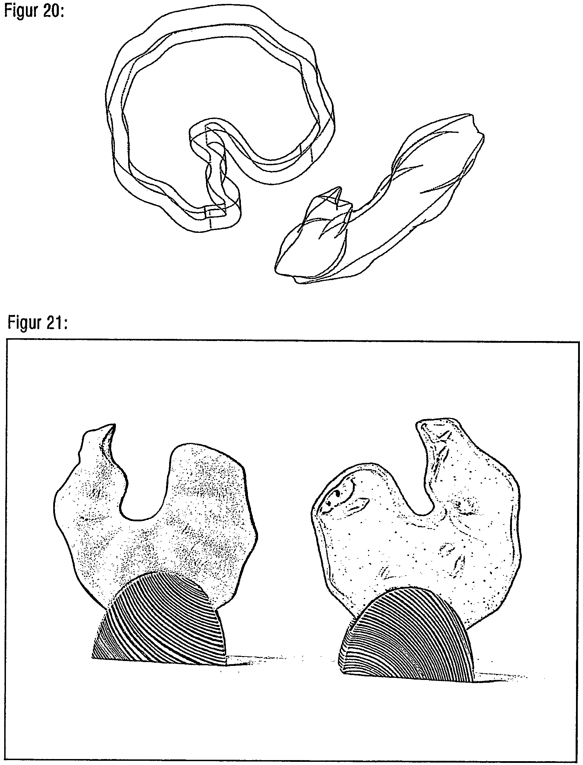

**Figur 20****:** Die CAD- positive und negative Formen
**Figur 21****:** Der gefräste positive Form aus Polyurethan Hartschaum zum Tiefziehen neben fertig hergestellte Produkt.

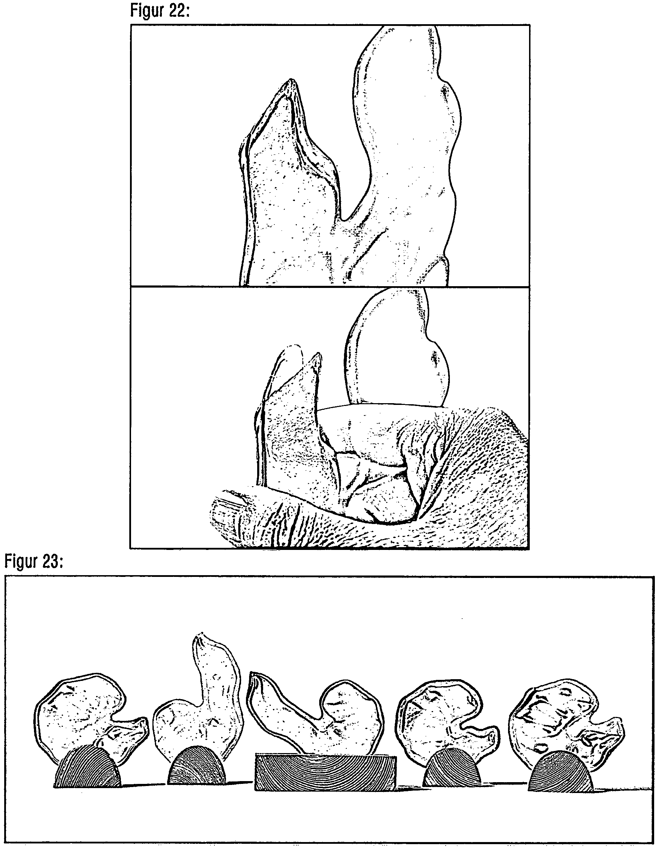

**Figur 22****:** Die Öffnung ist in stehender Position geschlossen. Durch geringen Druck öffnet sich der "Verschluss". Nach dem Gebrauch schließt sich die Öffnung wieder automatisch. Dadurch benötigt das Objekt keinen Deckel.
**Figur 23****:** verschiedene tiefgezogene Produkte aus der hergestellten Folie.

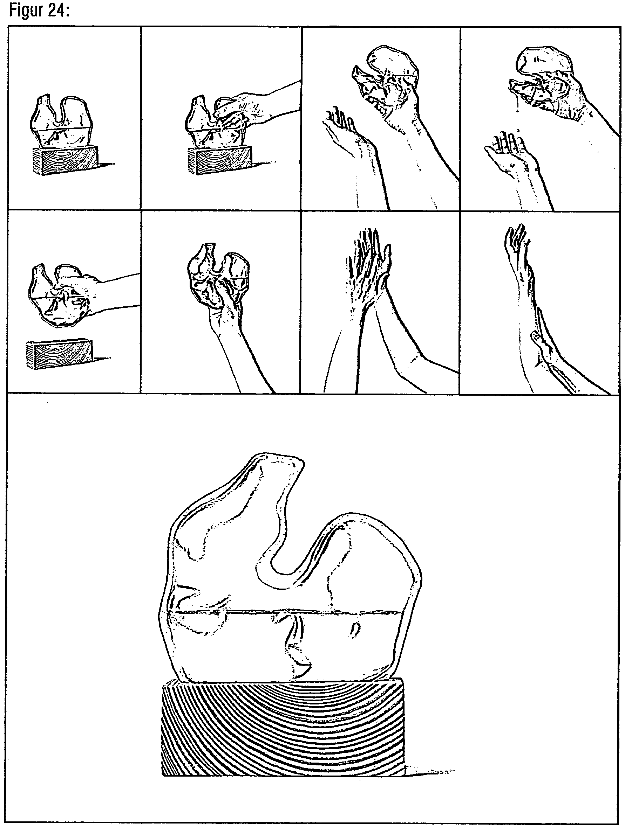

**Figur 24****:** Hier ist ein Behälter, der aus Tragant Harz hergestellt wurden. Es gibt hier die für flüssige und cremige Inhalte auf Öl- bzw. Alkoholbasis. So können sie beispielsweise als Kosmetikverpackung für Körperpflege oder als Lebensmittelverpackung für Olivenöl eingesetzt werden. Der Behälter selbst kann komplett aufgebraucht werden.

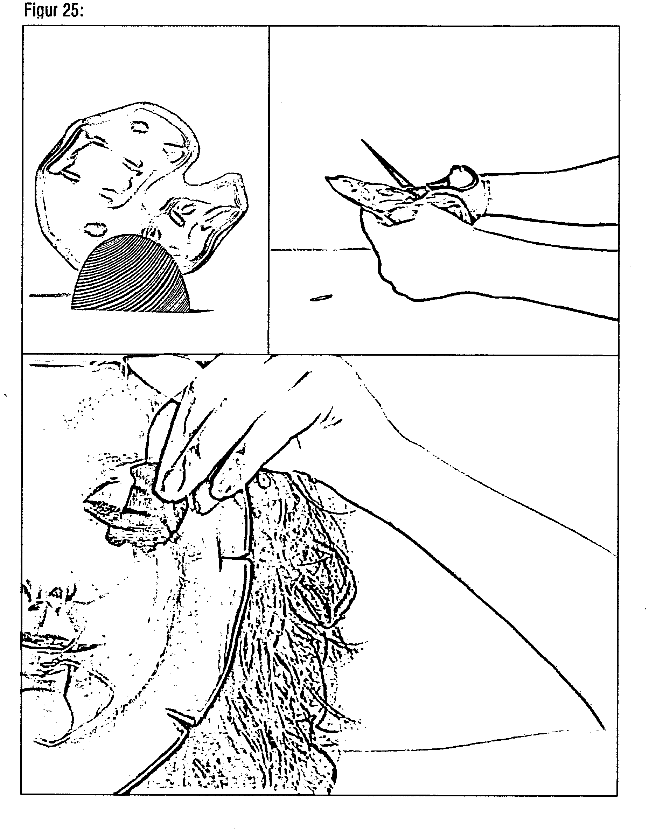

**Figur 25****:** Da Tragant für Haut und Haar sehr gesund ist, kann man die leere Verpackung z.B.
als Gesichtsmaske oder Scrub benutzten. Um das in eine Gesichtsmaske zu transformieren,
schneidet man die leere Verpackung einfach an einer Seite auf und legt die angefeuchtete Folie auf das Gesicht. Alternativ ist es möglich die leere Verpackung wie einen Handschuh über die Finger zu ziehen und damit Gesicht oder Körper einzureiben. Als dritte Variante schneidet man die Verpackung in kleine Teile und löst sie sich in einer Schale Wasser zu einem Gel auf, mit dem man beim Duschen den Körper waschen kann.

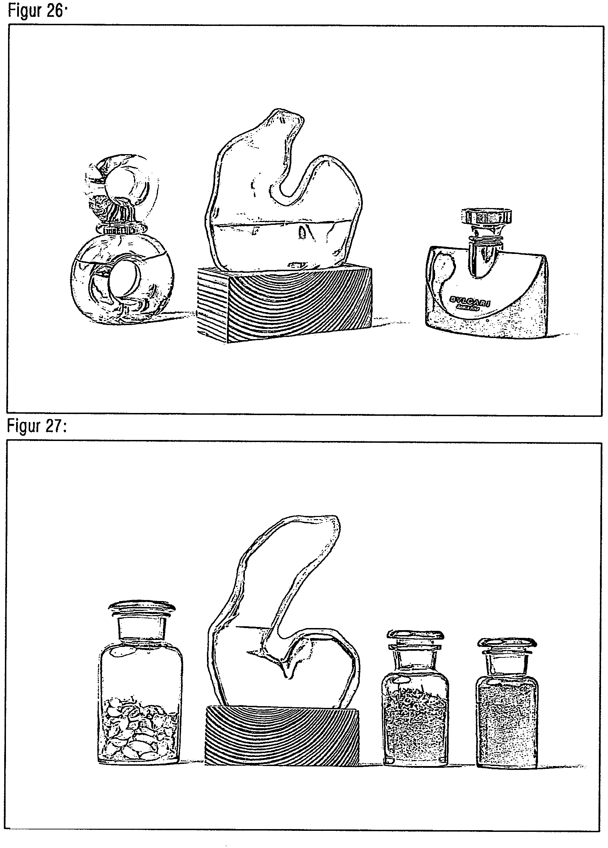

**Figur 26****:** Das fertige Produkt aus Tragantfolie als Beispiel für kosmetische Verpackungen
**Figur 27****:** Das fertige Produkt aus Tragantfolie als Beispiel für Lebensmittelverpackungen.

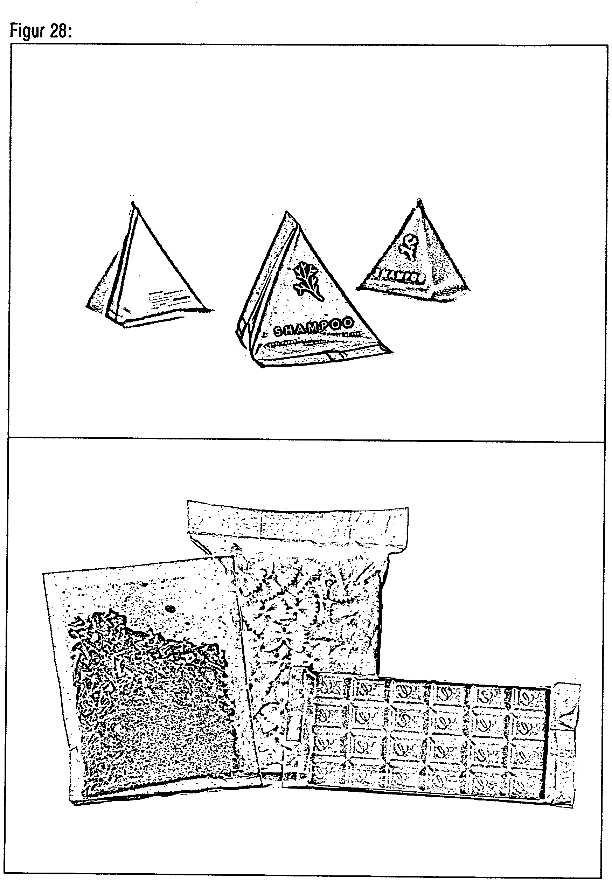

**Figur 28****:** Hier sind zwei Beispiele für Verpackung aus Tragantfolie (Mini Shampoo und Lebensmittelverpackung) . Die Tragant Biokunststoffes können als Verpackungsmaterial, Körperpfegeprodukte, Medizinprodukte und Medizinverpackungen und alle mögliche Verpackung und Produkte verwenden werden. (Das ist nur ein Beispiel über Herstellungsverfahren und Verpackung aus viele Möglichkeiten, die dieser Biokunststoff, Herstellungsverfahren und Verpackungsmöglichkeiten uns bietet. D.h. es ist möglich, der Biokunststoff, Herstellungsverfahren und Verpackungsmöglichkeiten nach Bedarf zu variieren und auf andere Art und Weise vorzubereiten.)

## Patentansprüche

1. Biokunststoff umfassend ein Harz der Pflanze Astragalus und Glycerin und Quettmittel, wobei der Biokunstoff biologisch abbaubar ist.

2. Biokunststoff nach Anspruch 1, wobei dieser wasserlöslich, geschmacksneutral, geruchlos, ungiftig, essbar, transparent, zugfest, flexibel, ölresistent, alkoholresistent, bedruckbar und/oder recyclebar ist.

3. Biokunststoff nach Anspruch 1 oder 2, wobei der Biokunststoff zusätzlich einen Farbstoff umfasst.

4. Biokunststoff nach mindestens einem der vorhergehenden Ansprüche, wobei das Quellmittel ein flüssiges Quellmittel ist, ausgewählt aus der Gruppe umfassend Wasser, destilliertes Wasser wässrige Lösungenw.

5. Verfahren zur Herstellung eines Biokunststoffes nach mindestens einem der vorherigen Ansprüche, umfassend folgende Schritte
a) Bereitstellung eines Harzes der Pflanze Astragalus,
b) Inkubation des Harzes mit einem flüssigen Quellmittel
c) Blenden
d) Eindicken
e) Zugabe von Glycerin und optional mindestens einem Farbstoff zu dem gequollenen Harz,
f) Mischen,
g) Sieben,
h) Vakuumieren und Entfernen von Luftblasen,
i) auf eine Ptatte gießen
j) Aushärten.

6. Verfahren nach dem vorhergehenden Anspruch, wobei Schritt d mit oder ohne Wärmezufuhr bis zu 100 °C erfolgen kann.

7. Verfahren nach Anspruch 5 oder 6, wobei das ausgehärtete Polymer mittels Tiefziehtechnik formgebend bearbeitet wird.

8. Verfahren nach mindestens einem der Ansprüche 5 bis 7, wobei das Quellmittel ein flüssiges Quellmittel ist, ausgewählt aus der Gruppe umfassend Wasser, destilliertes Wasser wässrige Lösungen.

9. Verfahren nach mindestens einem der Ansprüche 5 - 8, wobei durch die Variation der Glycerinmenge die Flexibilität und Zugfestigkeit eingestellt werden kann.

10. Verfahren nach mindestens einem der Ansprüche 5 bis 9, wobei das Verhältnis von Harz zu Quellmittel je nach Bedarf variieren kann.

11. Verfahren nach mindestens einem der Ansprüche 5 bis 10, wobei das Verhältnis von Harz zu anderen zusätzliche Stoffe oder Materialien wie Gewürze, Kräuter oder andere Verdickungsmittel je nach Bedarf variieren kann.

12. Biokunststoff hergestellt mit einem Verfahren gemäß mindestens einem der Ansprüche 5 -10,

13. Verwendung eines Biokunststoffes nach mindestens einem der vorhergehenden Ansprüche als Verpackungsmaterial, Körperpflegeprodukt, Medizinprodukt.
